# EUROPEAN PATENT APPLICATION

(11) **EP 2 159 194 A2**
(43) Date of publication of application: **03.03.2010**
(21) Application number: 09166784.0
(22) Date of filing: 30.07.2009
(51) Int. Cl.: C01B 31/02

(54) **Method for Fabricating Carbon Nanotube Plate**

(30) Priority: 29.08.2008 KR 20080085432
(71) Applicant: SAMSUNG ELECTRONICS CO., LTD., Suwon-si, Gyeonggi-do (KR)
(72) Inventor: Park, Dae Wook, Gyeonggi-do (KR); Song, Chul Ho, Gyeonggi-do (KR); Lee, Young Hee, Gyeonggi-do (KR)
(74) Representative: Grünecker, Kinkeldey, Stockmair & Schwanhäusser Anwaltssozietät

(57) **Abstract**

An electrode and a method for fabricating the same are disclosed. The method includes adding carbon nanotubes to a mixed solution of nitric acid and sulfuric acid and subjecting the carbon nanotube solution to microwaves for surface treatment resulting in facilitating the surface treatment, subjecting the carbon nanotube solution to ultrasonic waves to disperse the carbon nanotubes resulting in increasing the dispersion effect, subjecting the carbon nanotube solution to filtration and drying the carbon nanotubes to obtain a carbon nanotube plate mold.

## Description

### BACKGROUND OF THE INVENTION

### 1. Field of the Invention

The present invention relates to a method for fabricating a carbon nanotube plate, and more particularly to a method for fabricating a carbon nanotube plate utilized as electrodes for water treatment and air purifying systems.

### 2. Description of the Related Art

Capacitive Deionization (hereinafter, abbreviated as CDI) technology is based on a simple principle to remove ions or various colloidal particles in water. According to the CDI technology, the positively or negatively charged particles are capacitively attracted to and held on the electrodes of opposite charge when voltage is applied between negative and positive electrodes.

Electrode materials appropriate in removing ions using the CDI technology must satisfy a number of conditions such as high specific surface area and capacitance, good electrochemical stability, and good pore distribution for easy and fast adsorption/desorption of ions. To the present, the electrode materials suited for the CDI technology has been restricted to mainly active carbon powders or carbon aerogels. These materials require a binder to be molded into a form of an electrode. However, the binder led to deterioration in the electrode characteristics and increase of the electrode volume. Thus, it is considered not suitable to use the binder when using the carbon powders or carbon aerogels.

As the electrode material that relatively satisfies the conditions required in the CDI technology without needing the binder, carbon nanotubes (CNTs) can be mentioned. The carbon nanotubes have a human hair-like shape that entangles well together. Thus, an additional binder is not necessary. However, when the carbon nanotubes are not uniformly dispersed throughout the overall surface of an electrode and lump together at a specific site, the uniformity and unity of the electrode is reduced causing the electrode to crack and easily be damaged.

### SUMMARY OF THE INVENTION

The present invention has been made in order to solve the above problems. It is an aspect of the invention to provide a method for fabricating a carbon nanotube plate utilized as electrodes for water treatment and air purifying systems.

Additional aspects and/or advantages of the invention will be set forth in part in the description which follows and, in part, will be obvious from the description, or may be learned by practice of the invention.

In accordance with an aspect of the invention, there is provided a method for fabricating a carbon nanotube plate comprising: adding carbon nanotubes to a mixed solution of nitric acid and sulfuric acid and subjecting the carbon nanotube solution to microwaves for surface treatment, subjecting the carbon nanotube solution to ultrasonic waves to disperse the carbon nanotubes, subjecting the carbon nanotube solution to filtration, and drying the carbon nanotubes.

The surface treatment may be carried out by subjecting the carbon nanotube solution to microwaves for a first period of time and cooling the carbon nanotube solution for a second period of time.

The first period of time may be 1 minute and the second period of time may be 5 minutes.

The irradiation of microwaves and cooling may be repeated 3 times.

The fabrication method further includes neutralizing the carbon nanotube solution using deionized water after surface treating the carbon nanotubes and before subjecting the solution to ultrasonic waves.

The carbon nanotube solution may be subjected to filtration using a membrane filter having at least a predetermined size.

The fabrication method further includes subjecting the carbon nanotubes to infiltration with an active-additive solution after filtering the carbon nanotubes.

The fabrication method further includes subjecting the dried carbon nanotube plate to a heat treatment.

The heat treatment may be carried out under inert atmosphere at about 900°C for 4 hours.

The active-additive solution may be any one selected from pyrolytic polymers and inorganic salts.

In accordance with another aspect of the invention, there is provided a method for fabricating a carbon nanotube plate comprising: adding carbon nanotubes to deionized water mixed with a surfactant to disperse the carbon nanotubes, subjecting the carbon nanotube solution to filtration, and drying the carbon nanotubes.

The carbon nanotube solution may be subjected to filtration using a membrane filter having at least a predetermined size.

The fabrication method further includes subjecting the carbon nanotubes to infiltration with an active-additive solution after filtering the carbon nanotubes.

The fabrication method further includes subjecting the dried carbon nanotube plate to a heat treatment.

The heat treatment may be carried out under inert atmosphere at about 900°C for 4 hours.

The active-additive solution may be any one selected from pyrolytic polymers and inorganic salts.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a view illustrating a CDI electrode according to an embodiment of the present invention;
FIG. 2 is a view illustrating a simplified process for fabricating a carbon nanotube plate according to an embodiment of the present invention;
FIG. 3 are views each illustrating the effect of carbon nanotube dispersion on the quality of the carbon nanotube plate;
FIG. 4 is a flow chart illustrating a method for fabricating a carbon nanotube plate according to an embodiment of the present invention; and
FIG. 5 is a flow chart illustrating a method for fabricating a carbon nanotube plate according to another embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

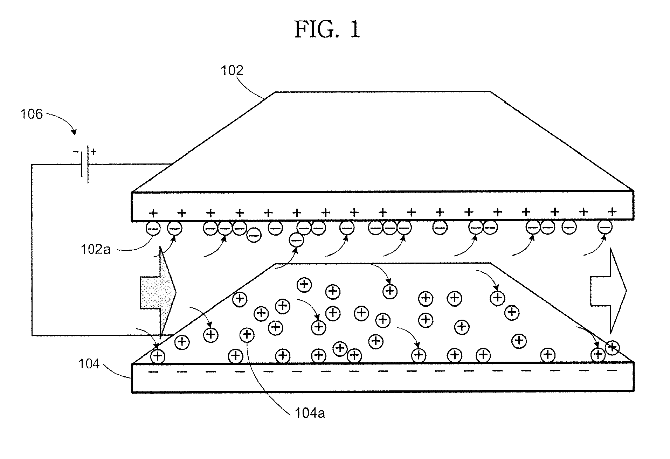

FIG. 1 is a view illustrating a CDI electrode according to an embodiment of the present invention. As shown in FIG. 1, two electrode plates 102 and 104 spaced apart from each other are connected to a power source 106, from which positive voltage and negative voltage is applied, respectively. When the positive and negative voltages are applied, anions 102a are electrically adsorb to the positively charged electrode plate 102 and cations 104a are electrically adsorb to the negatively charged electrode plate 104. As a result, ions existing in a fluid such as water are removed. When each electrode plate 102 or 104 of the CDI electrodes is saturated with ions, polarity of the electrode is changed to the opposite charge, thereby accomplishing electrical desorption of the ions. And, the electrode plates 102 and 104 are electrically recycled. The carbon nanotube plate according to an embodiment of the present invention is used as such electrode plates 102 and 104 of the CDI electrodes. Meanwhile, the carbon nanotube plate according to the embodiment of the present invention can also be widely used in the other fields.

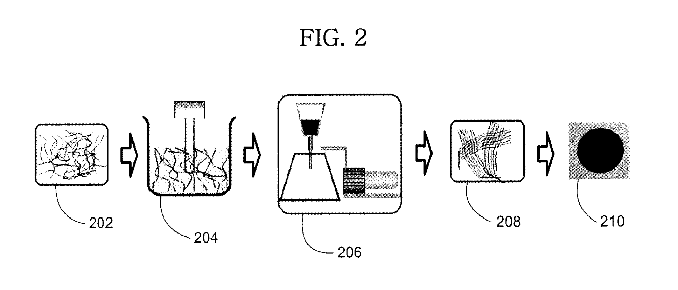

FIG. 2 is a view illustrating a simplified process for fabricating a carbon nanotube plate according to an embodiment of the present invention. As shown in FIG. 2, entangled carbon nanotubes in powder form 202 is subjected to a surface treatment for dispersion (204). Here, the dispersion refers to a process for uniformly distributing the entangled carbon nanotubes in powder form 202, so that a lump is not generated. The carbon nanotube dispersion solution which completed the surface treatment is subjected to filtration using a membrane filter (206). Because the uniformity of the carbon nanotubes is improved due to entanglement relaxation of the carbon nanotubes in the prior dispersion process, the carbon nanotube powder has a uniform characteristic without being lumped at one place (208). Further, in the process of filtration, the carbon nanotube powder is shaped into a thin and wide carbon nanotube plate in accordance to the shape of the filtration paper (210). Thusly formed thin and wide carbon nanotube plate is cut into a desired size to fabricate a CDI electrode.

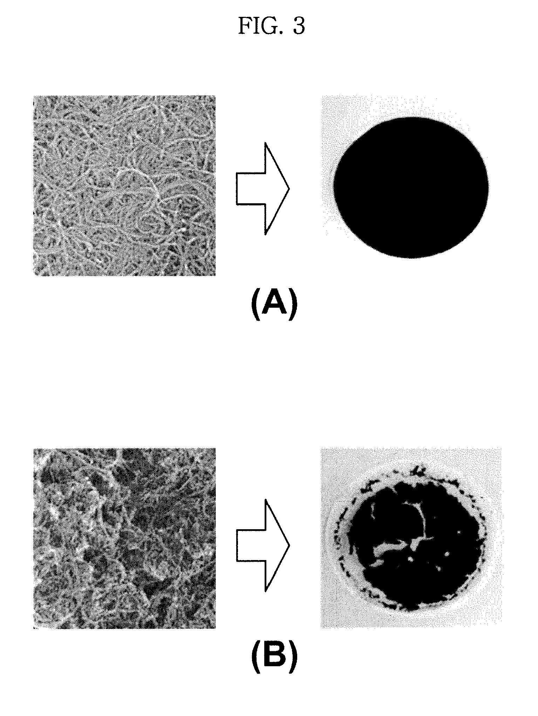

FIG. 3 are views each illustrating the effect of carbon nanotube dispersion on the quality of the carbon nanotube plate. FIG. 3A is a carbon nanotube plate prepared using an electrode fabrication method according to an embodiment of the present invention. As can be seen from the drawing, the dispersion state (left) of the carbon nanotubes is uniform, and as a result, the product, electrode plate (right), is also fabricated in solid state. On the other hand, in the case of FIG. 3B, which used a different method for fabricating the plate, the dispersion state (left) of the carbon nanotubes is not uniform, and as a result, the product, carbon nanotube plate (right) indeed generates cracks. Thus, the plate cannot serve as an electrode. As can be seen from the above, when the uniformity of the carbon nanotube dispersion is good, the quality of the product carbon nanotube plate increases.

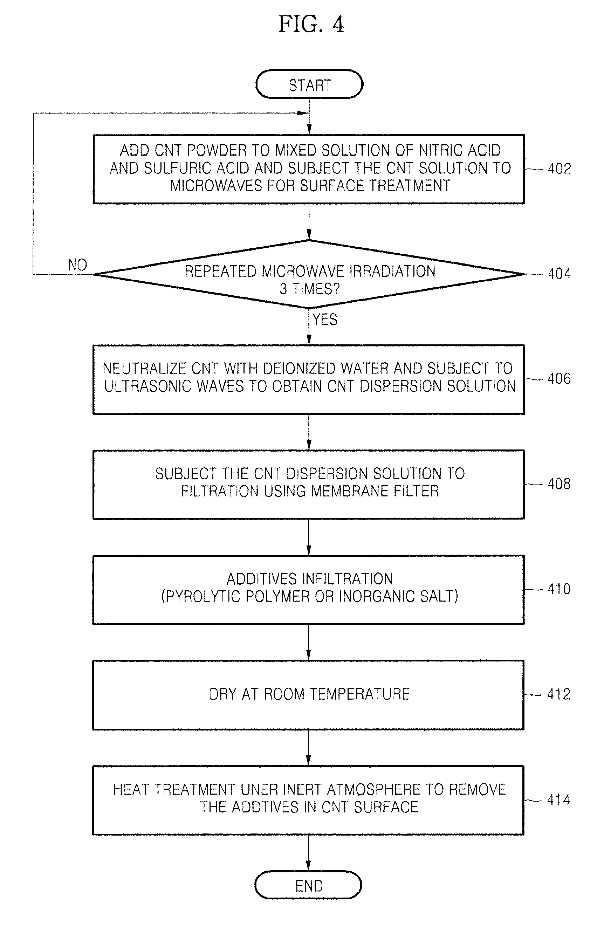

FIG. 4 is a flow chart illustrating a method for fabricating a carbon nanotube plate according to an embodiment of the present invention. As shown in FIG. 4, a carbon nanotube powder is added to a mixed solution of nitric acid and sulfuric acid and the carbon nanotube solution is subjected to microwaves for surface treatment (402). At this time, microwave irradiation is carried out for 1 minute followed by cooling for 5 minutes. This process is repeated 3 times in this order. When microwave irradiation in repeat of 3 times is completed (refer to 404), the surface treated carbon nanotubes are neutralized with deionized water. The neutralized carbon nanotubes solution is then subjected ultrasonic waves to facilitate the dispersion process, thereby obtaining a carbon nanotube dispersion solution (406). The carbon nanotube dispersion solution is subjected to filtration using a membrane filter having at least a predetermined size (408). Limiting the filter size to at least a predetermined size is to obtain a carbon nanotube plate with at least a predetermined size. After filtering the carbon nanotube dispersion solution, the filtered carbon nanotubes in wet state (at this time, the percentage of water content is in a range of about 700 to 1000%) are directly subjected to infiltration with an active-additive solution (410). The active-additive solution is a pyrolytic polymer or an inorganic salt. While subjecting the carbon nanotubes to infiltration with the active-additive solution, the additives are filled into spaces between the carbon nanotubes and mezopores formed by the entanglement of carbon nanotubes. These additives remain therein even after drying the carbon nanotubes. These additives are removed through a heat treatment in the subsequent process. This process activates the carbon nanotube surface, thereby forming pores. The filtered substance is dried slowly at room temperature (412). This slow drying at room temperature allows slow removal of water so as to minimize contraction and deformation of the carbon nanotube plate. As mentioned above, in order to remove the additives added in the filtration process, a carbon nanotube plate mold is subjected to a heat treatment under inert atmosphere (414). After such a filtration and drying process, the carbon nanotube plate mold is obtained.

In the surface treatment process, subjecting the carbon nanotubes to microwaves facilitates oxidation of the carbon nanotubes. The oxidation contributes greatly to the dispersion effect. However, when the microwaves are continuously irradiated, the degree of oxidation may progress to a point exceeding the desired level. Therefore, it is preferable that the degree of heating is suitably controlled by irradiating for 1 minute followed by cooling for 5 minutes.

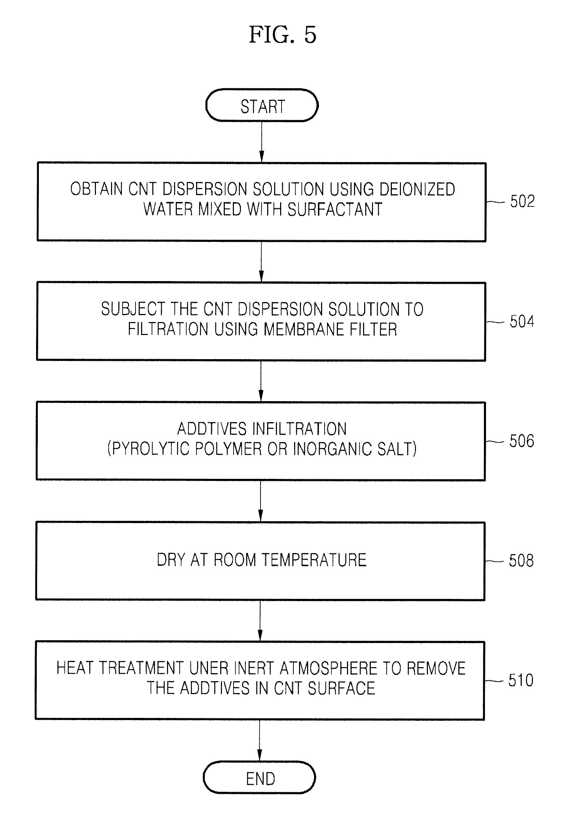

FIG. 5 is a flow chart illustrating a method for fabricating a carbon nanotube plate according to another embodiment of the present invention. As shown in FIG. 5, a carbon nanotube powder is added to deionized water mixed with a surfactant to obtain a carbon nanotube dispersion solution (502). The carbon nanotube dispersion solution is subjected to filtration using a membrane filter having at least a predetermined size (504). Limiting the filter size to at least a predetermined size is to obtain a carbon nanotube plate with at least a predetermined size. After filtering the carbon nanotube dispersion solution, the filtered carbon nanotubes in wet state (at this time, the percentage of water content is in a range of about 700 to 1000%) are directly subjected to infiltration with an active-additive solution (506). The active-additive solution is a pyrolytic polymer or an inorganic salt. While subjecting the carbon nanotubes to infiltration with the active-additive solution, the additives are filled into spaces between the carbon nanotubes and mezopores formed by the entanglement of carbon nanotubes. These additives remain therein even after drying the carbon nanotubes. These additives are removed through a heat treatment in the subsequent process. This process activates the carbon nanotube surface, thereby forming pores. The filtered substance is dried slowly at room temperature (508). This slow drying at room temperature allows slow removal of water so as to minimize contraction and deformation of the carbon nanotube plate. As mentioned above, in order to remove the additives added in the filtration process, a carbon nanotube plate mold is subjected to a heat treatment under inert atmosphere (510). After such a filtration and drying process, the carbon nanotube plate mold is obtained.

A pair of the carbon nanotube plate molds is formed with a respective power connection terminal to apply power. Thusly obtained carbon nanotube plate molds are utilized as electrodes for a water treatment system such as a water purifier/ water softener/ seawater freshener or for an air purifying system.

Although the embodiments of the present invention have been described without the use of the binder, the present invention is not limited to such embodiments. That is, the present invention may be applicable to method and devices using the binder as long as the benefits of the carbon nanotube plates and the method of fabricating of such, as defined in the claims, are utilized.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. A method for fabricating a carbon nanotube plate comprising:
adding carbon nanotubes to a mixed solution of nitric acid and sulfuric acid and subjecting the carbon nanotube solution to microwaves for surface treatment;
subjecting the carbon nanotube solution to ultrasonic waves to disperse the carbon nanotubes;
subjecting the carbon nanotube solution to filtration; and
drying the carbon nanotubes.

2. The method according to claim 1, wherein the surface treatment is carried out by subjecting the carbon nanotube solution to microwaves for a first period of time and cooling the carbon nanotube solution for a second period of time.

3. The method according to claim 1, wherein the first period of time is 1 minute and the second period of time is 5 minutes.

4. The method according to claim 2, wherein the irradiation of microwaves and cooling is repeated 3 times.

5. The method according to claim 1, further comprising neutralizing the carbon nanotube solution using deionized water after surface treating the carbon nanotubes and before subjecting the solution to ultrasonic waves.

6. The method according to claim 1, wherein the carbon nanotube solution is subjected to filtration using a membrane filter having at least a predetermined size.

7. The method according to claim 1, further comprising subjecting the carbon nanotubes to infiltration with an active-additive solution after filtering the carbon nanotubes.

8. The method according to claim 1, further comprising subjecting the dried carbon nanotube plate to a heat treatment.

9. The method according to claim 8, wherein the heat treatment is carried out under inert atmosphere at about 900°C for 4 hours.

10. The method according to claim 7, wherein the active-additive solution is any one selected from pyrolytic polymers and inorganic salts.

11. A method for fabricating a carbon nanotube plate comprising:
adding carbon nanotubes to deionized water mixed with a surfactant to disperse the carbon nanotubes;
subjecting the carbon nanotube solution to filtration; and
drying the carbon nanotubes.

12. The method according to claim 11, wherein the carbon nanotube solution is subjected to filtration using a membrane filter having at least a predetermined size.

13. The method according to claim 11, further comprising subjecting the carbon nanotubes to infiltration with an active-additive solution after filtering the carbon nanotubes.

14. The method according to claim 11, further comprising subjecting the dried carbon nanotube plate to a heat treatment.

15. The method according to claim 14, wherein the heat treatment is carried out under inert atmosphere at about 900°C for 4 hours.

16. The method according to claim 15, wherein the active-additive solution is any one selected from pyrolytic polymers and inorganic salts.
